# EUROPEAN PATENT APPLICATION

(11) **EP 4 439 414 A1**
(43) Date of publication of application: **02.10.2024**
(21) Application number: 23220302.6
(22) Date of filing: 27.12.2023
(51) Int. Cl.: G06Q 10/06, G06Q 10/30

(54) **METHOD AND SYSTEM FOR SHARING CARBON FOOTPRINT**

(30) Priority: 29.03.2023 CN 202310324059
(71) Applicant: Sungrow Icarbon Technology Co., Ltd., Hefei, Anhui 230088 (CN)
(72) Inventor: SONG, Shi, 230088 Hefei, Anhui (CN)
(74) Representative: Bottero, Carlo

(57) **Abstract**

A method and a system for sharing carbon footprint are provided. A carbon footprint master agent, at least one level of carbon footprint object agent, and at least one carbon emission unit are constructed. As the smallest carbon footprint management object, the carbon emission unit sends its carbon footprint data to the corresponding carbon footprint object agent. The carbon footprint object agent cascades the carbon footprint data based on a hierarchical relationship between the carbon footprint object agents, and finally to the carbon footprint master agent. The carbon footprint master agent manages the carbon emission units and subordinate carbon footprint object agents according to groups and levels, to timely and accurately share the carbon footprint data among all levels of carbon footprint agents. The carbon footprint master agent also performs comprehensive analysis on the received carbon footprint data.

## Description

### TECHNICAL FIELD

The present disclosure relates to the technical field of carbon emissions, and more specifically, to a method and a system for sharing a carbon footprint.

### BACKGROUND

Derived from "ecological footprint", "carbon footprint", which is expressed as carbon dioxide equivalent (CO2eq for short), indicates a total amount of emissions of greenhouse gases from production and consumption activities. Compared to a single concept of carbon dioxide emissions, the carbon footprint is used to estimates the emissions of greenhouse gases directly or indirectly generated by a research object during its lifecycle. For the same object, calculation of the carbon footprint is more difficult and involves a wider range compared with the carbon emissions. A calculation result of the carbon footprint contains information about carbon emissions.

Carbon footprints may be classified into national carbon footprints, urban carbon footprints, organizational carbon footprints, enterprise carbon footprints, household carbon footprints, product carbon footprints, and individual carbon footprints according to the application scenarios. Due to the large number, complex types and structures of a carbon footprint management object, carbon footprint data fails to be shared timely and accurately.

### SUMMARY

In view of this, a method and a system for sharing a carbon footprint are provided according to the present disclosure, to timely and accurately share the carbon footprint data among all levels of carbon footprint agents.

To achieve the above purpose of invention, the technical solutions according to the present disclosure are detailed as follows.

In a first aspect, a method for sharing a carbon footprint is provided according to the embodiments of the present disclosure. The method includes: sending carbon footprint data by a carbon emission unit to a carbon footprint object agent; cascading the carbon footprint data sent by the carbon emission unit or carbon footprint data sent by a subordinate carbon footprint object agent to a superior carbon footprint object agent or a carbon footprint master agent, by the carbon footprint object agent based on a hierarchical relationship between the carbon footprint object agents; and analyzing the received carbon footprint data by the carbon footprint master agent.

In some embodiments, the cascading the carbon footprint data sent by the carbon emission unit or carbon footprint data sent by the subordinate carbon footprint object agent to the superior carbon footprint object agent or the carbon footprint master agent includes: collecting carbon emission data for stages in a lifecycle of the carbon footprint and cascading the collected data to the superior carbon footprint object agent or the carbon footprint master agent based on the hierarchical relationship between the carbon footprint object agents, by the carbon footprint object agent when receiving the carbon footprint data sent by the carbon emission unit or the carbon footprint data sent by the subordinate carbon footprint object agent.

In some embodiments, the cascading the carbon footprint data sent by the carbon emission unit or the carbon footprint data sent by the subordinate carbon footprint object agent to the superior carbon footprint object agent or the carbon footprint master agent includes: determining whether the carbon emission unit or the subordinate carbon footprint object agent is operating properly based on an operation status in the carbon footprint data, by the carbon footprint object agent when receiving the carbon footprint data sent by the carbon emission unit or the carbon footprint data sent by the subordinate carbon footprint object agent; determining whether the received carbon footprint data is sent by all the carbon emission unit or all the subordinate carbon footprint object agent, if it is determined that the carbon emission unit or the subordinate carbon footprint object agent is operating properly; collecting carbon emission data for stages in the lifecycle of the carbon footprint if it is determined that the received carbon footprint data is sent by all the carbon emission unit or all the subordinate carbon footprint object agent; and cascading the collected data to the superior carbon footprint object agent or the carbon footprint master agent by the carbon footprint object agent based on the hierarchical relationship between the carbon footprint object agents.

In some embodiments, the analyzing the received carbon footprint data by the carbon footprint master agent includes: determining a carbon footprint contribution factor by the carbon footprint master agent based on the received carbon footprint data, where the carbon footprint contribution factor comprises at least one of a total amount of carbon footprint, the number of stages in the lifecycle of the carbon footprint involved, the carbon footprint at each of the stages in the lifecycle of the carbon footprint, a product component involved, and a carbon footprint in the product component; and calculating a proportion of the carbon footprint contribution factor based on the carbon footprint contribution factor, and performing contribution analysis on the carbon footprint object agent.

In some embodiments, the analyzing the received carbon footprint data by the carbon footprint master agent includes: determining footprint data for a product under different production processes and carbon footprint data for a product component under different production processes based on the received carbon footprint data; comparing the footprint data for the product under the different production processes to obtain a sensitivity factor affecting an amount of the carbon footprint of the product; and comparing the footprint data for the product component under the different production processes to obtain a sensitivity factor affecting an amount of the carbon footprint of the product component.

In some embodiments, the analyzing the received carbon footprint data by the carbon footprint master agent includes: performing contribution analysis and sensitivity analysis on the received carbon footprint data, to obtain a proportion of a carbon footprint contribution factor for each carbon footprint object agent, a sensitivity factor affecting an amount of a carbon footprint of a product, and a sensitivity factor affecting an amount of a carbon footprint of a product component; generating carbon reduction solutions based on the proportions of the carbon footprint contribution factors, the sensitivity factor affecting the amount of carbon footprint of the product, and the sensitivity factor affecting the amount of carbon footprint of the product component; and performing economic analysis and feasibility analysis on the carbon reduction solutions to obtain an optimal carbon reduction solution.

In a second aspect, a system for sharing a carbon footprint is provided according to the embodiments of the present disclosure. The system includes: a carbon footprint master agent, at least one level of carbon footprint object agent, and at least one carbon emission unit. The carbon emission unit is configured to send carbon footprint data to the corresponding carbon footprint object agent. The carbon footprint object agent is configured to cascade the carbon footprint data sent by the carbon emission unit or carbon footprint data sent by a subordinate carbon footprint object agent to a superior carbon footprint object agent or the carbon footprint master agent based on a hierarchical relationship between the carbon footprint object agents. The carbon footprint master agent is configured to analyze the received carbon footprint data.

In some embodiments, the carbon footprint object agent is configured to: collect carbon emission data for stages in a lifecycle of the carbon footprint and cascade the collected data to the superior carbon footprint object agent or the carbon footprint master agent based on the hierarchical relationship between the carbon footprint object agents, when receiving the carbon footprint data sent by the carbon emission unit or the carbon footprint data sent by the subordinate carbon footprint object agent.

In some embodiments, the carbon footprint object agent is configured to: determine whether the carbon emission unit or the subordinate carbon footprint object agent is operating properly based on an operation status in the carbon footprint data, by the carbon footprint object agent when receiving the carbon footprint data sent by the carbon emission unit or the carbon footprint data sent by the subordinate carbon footprint object agent; determine whether the received carbon footprint data is sent by all the carbon emission unit or all the subordinate carbon footprint object agent, if it is determined that the carbon emission unit or the subordinate carbon footprint object agent is operating properly; collect carbon emission data for stages in the lifecycle of the carbon footprint if it is determined that the received carbon footprint data is by all the carbon emission unit or all the subordinate carbon footprint object agent; and cascade the collected data to the superior carbon footprint object agent or the carbon footprint master agent based on the hierarchical relationship between the carbon footprint object agents.

In some embodiments, the carbon footprint master agent is configured to: determine a carbon footprint contribution factor based on the received carbon footprint data, where the carbon footprint contribution factor comprises at least one of a total amount of carbon footprint, the number of stages in the lifecycle of the carbon footprint involved, the carbon footprint at each of the stages in the lifecycle of the carbon footprint, a product component involved, and a carbon footprint in the product component; and calculate a proportion of the carbon footprint contribution factor based on the carbon footprint contribution factor, and perform contribution analysis on the carbon footprint object agent.

In some embodiments, the carbon footprint master agent is configured to: determine carbon footprint data for a product under different production processes and carbon footprint data for a product component under different production processes based on the received carbon footprint data; compare the footprint data for the product under the different production processes to obtain a sensitivity factor affecting an amount of the carbon footprint of the product; and compare the footprint data for the product component under the different production processes to obtain a sensitivity factor affecting an amount of the carbon footprint of the product component.

In some embodiments, the carbon footprint master agent is configured to: perform contribution analysis and sensitivity analysis on the received carbon footprint data, to obtain a proportion of a carbon footprint contribution factor for each carbon footprint object agent, a sensitivity factor affecting an amount of a carbon footprint of a product, and a sensitivity factor affecting an amount of a carbon footprint of a product component; generate carbon reduction solutions based on the proportions of the carbon footprint contribution factors, the sensitivity factor, and the sensitivity factor; and perform economic analysis and feasibility analysis on the carbon reduction solutions to obtain an optimal carbon reduction solution.

Compared to the conventional technology, the present disclosure has the following beneficial effects.

In the system for sharing the carbon footprint according to the present disclosure, the carbon footprint master agent, at least one level of carbon footprint object agent, and at least one carbon emission unit are constructed. As the smallest carbon footprint management object, the carbon emission unit sends its carbon footprint data to the corresponding carbon footprint object agent. The carbon footprint object agent cascades the carbon footprint data based on the hierarchical relationship between the carbon footprint object agents, and finally to the carbon footprint master agent. The carbon footprint master agent manages the carbon emission units and subordinate carbon footprint object agents according to groups and levels, to timely and accurately share the carbon footprint data among all levels of carbon footprint agents. The carbon footprint master agent may also analyze the received carbon footprint data comprehensively.

### BRIEF DESCRIPTION OF THE DRAWINGS

For more clearly illustrating embodiments of the present application or technical solutions in the conventional technology, the drawings for describing the embodiments or the conventional technology are briefly described hereinafter. Apparently, the drawings in the following description show only the embodiments of the present application, and other drawings may be obtained by those skilled in the art based on the provided drawings without any creative efforts.
Figure 1 is a schematic flowchart illustrating a method for sharing a carbon footprint according to an embodiment of the present disclosure;
Figure 2 is a schematic flowchart partially illustrating the method for sharing the carbon footprint according to an embodiment of the present disclosure;
Figure 3 is a schematic flowchart partially illustrating the method for sharing the carbon footprint according to an embodiment of the present disclosure;
Figure 4 is a schematic flowchart partially illustrating the method for sharing the carbon footprint according to an embodiment of the present disclosure; and
Figure 5 is a structural schematic diagram illustrating a system for sharing the carbon footprint according to an embodiment of the present disclosure.

### DETAILED DESCRIPTION OF THE EMBODIMENTS

Technical solutions of embodiments of the present application are clearly and completely described hereinafter in conjunction with the drawings of the embodiments of the present application. Apparently, the embodiments described in the following are only some rather than all of the embodiments of the present application. Based on the embodiments in the present disclosure, all the other embodiments which are obtained by those skilled in the art without any creative work fall within the protection scope of the present application.

Carbon footprint management is an effective way and important lever to achieve carbon neutrality. By implementing carbon footprint management for various enterprises, institutions, and households and implementing the entire life cycle of collaborative carbon reduction, fanning out from a point to an area, it is of great significance to promote the realization of the double carbon goal for cities and the whole society. Carbon footprint management is a complex system that involves an entire lifecycle process, with a large number of management objects, complex types and structures, and numerous changes, such as changes in emission sources and carbon reduction measures, changes in carbon neutrality policies, and standards. In addition, the research on a method for managing large-scale carbon footprint is not yet mature.

A method and a system for sharing carbon footprint are provided according to the present disclosure. A carbon footprint master agent, at least one level of carbon footprint object agent, and at least one carbon emission unit are constructed. As the smallest carbon footprint management object, the carbon emission unit sends its own carbon footprint data to the corresponding carbon footprint object agent. The carbon footprint object agent cascades the carbon footprint data based on a hierarchical relationship between the carbon footprint object agents, and finally to the carbon footprint master agent. The carbon footprint master agent manages the carbon emission units and subordinate carbon footprint object agents according to groups and levels, to timely and accurately share the carbon footprint data among all levels of carbon footprint agents. The carbon footprint master agent may also analyze the received carbon footprint data comprehensively.

The present disclosure is appliable to the management and sharing of "national carbon footprint", "urban carbon footprint", "organizational carbon footprint", "enterprise carbon footprint", "household carbon footprint", "product carbon footprint", and "individual carbon footprint". For the convenience of description, a product is taken as an example for the carbon footprint object agent in some of embodiments. However, the carbon footprint object agent herein is not limited to the product.

The enterprise carbon footprint refers to a total amount of emissions throughout an entire life cycle, including an operation of an enterprise and a supply chain of all products and raw materials thereof.

Product carbon footprint refers to a total amount of emissions of direct and indirect CO2 and other greenhouse gas (expressed as CO2 emission equivalents) released by a product throughout an entire lifecycle thereof, which is the accumulation of emissions of various greenhouse gases at multiple stages, from raw material extraction, product production, distribution, usage, to final recycling/disposal. When a boundary of the carbon footprint is determined, products are divided into two types: a raw material type and a terminal type. Some products have dual attributes of both the raw material type and the terminal type.

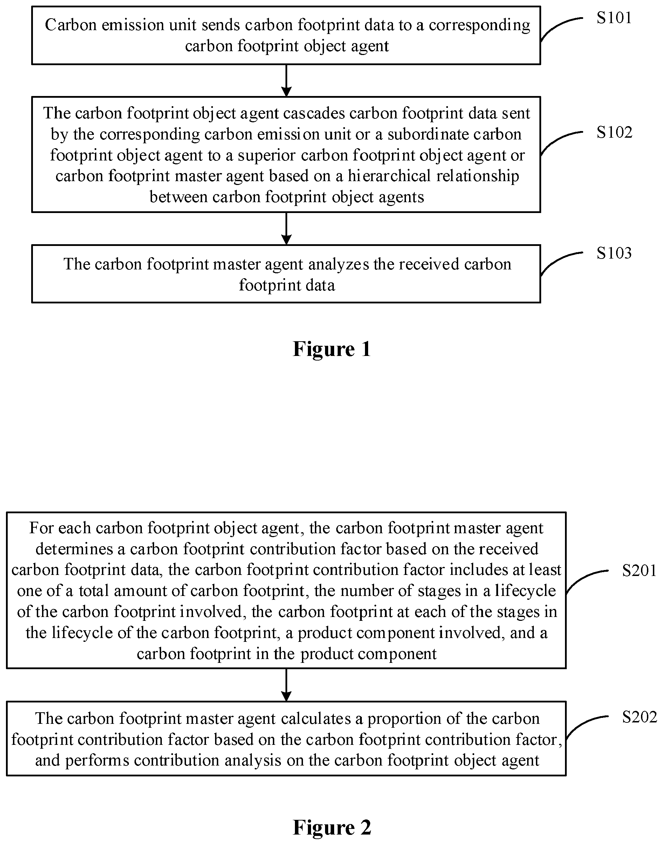

Referring to Figure 1, the method for sharing the carbon footprint according to the present embodiment includes the following steps of S101 to S103.

In S101, a carbon emission unit sends carbon footprint data to a corresponding carbon footprint object agent.

The carbon emission unit refers to an entity or a group generating carbon emissions.

Each carbon emission unit corresponds to a carbon footprint object agent. Various carbon emission units may correspond to the same carbon footprint object agent. That is, the carbon footprint object agent corresponds to at least one carbon emission unit.

Carbon footprint data refers to carbon footprint data of a product. The product includes a product of a raw material type and a product of a terminal type. A boundary of a product of the raw material type is a process of extracting raw materials, producing and processing to complete a product itself and packaging, to leaving a factory or delivering downstream to a customer is a boundary of calculating carbon footprint. A boundary of a product of the terminal type is a process of extracting and processing the raw materials to producing, packaging, marketing of a product, usage, maintenance, recycling, waste disposal and so on, is a boundary of calculating carbon footprint. A lifecycle process of a product of the raw material type generally includes the acquisition of raw materials (raw materials, a finished product) and the production of a product. A lifecycle process of a product of the terminal type generally includes the acquisition of raw materials (raw materials, a finished product), the production of a product, packaging and transportation, usage of a product, and recycling of a product. Some products have dual attributes of both the raw material type and the terminal type.

The carbon emission unit may acquire the carbon footprint data from production process data and Bill of Material (BOM) data of a product, and send the acquired carbon footprint data to a corresponding carbon footprint object agent.

In S 102, the carbon footprint object agent cascades the carbon footprint data sent by the corresponding carbon emission unit or the carbon footprint data sent by a subordinate carbon footprint object agent to a superior carbon footprint object agent or the carbon footprint master agent based on a hierarchical relationship between the carbon footprint object agents.

It should be noted that there is at least one level of carbon footprint object agent between the carbon footprint master agent and the carbon emission unit. The carbon footprint object agent is an abstraction and intelligence of a product with carbon footprint.

Taking natural mineral mining as an example, there is one level of carbon footprint object agent between the carbon footprint master agent and the carbon emission unit. The carbon emission unit is a natural mineral, and the carbon footprint object agent is an abstraction and intelligence of a natural mineral, such as a device for developing and managing a natural mineral.

Carbon footprint management is cascaded. Taking the manufacture of a car as an example, a car corresponds to a carbon footprint object agent. Various components of a car correspond to subordinate agent, such as a tire. As the tire is composed of a valve core, etc., the valve core corresponds to subordinate agent of the carbon footprint object agent of the tire. As the valve core is composed of a copper nozzle, the copper nozzle corresponds to subordinate agent of the carbon footprint object agent of the valve core. As the copper nozzle is produced from a copper material, the copper material corresponds to subordinate agent of the carbon footprint object agent of the copper nozzle. As the copper material is produced from a copper ore, the copper ore corresponds to subordinate agent of the carbon footprint object agent of the copper material.

In S103, the carbon footprint master agent analyzes the received carbon footprint data.

It can be understood that, the carbon footprint master agent can receive complete carbon footprint data through collection by the carbon emission unit and at least one level of carbon footprint object agents, and analyze the received carbon footprint data, such as, checking an integrity, a consistency, and preforming other data quality checks, perform contribution analysis, sensitivity analysis, and carbon reduction cost analysis on the carbon footprint data collected by each level of carbon footprint object agent and optimize a carbon reduction strategy to not only achieve a carbon reduction target but also optimize economic effectiveness, achieving optimization of collaborative carbon reduction throughout the entire lifecycle of the supply chain.

According to the method for sharing the carbon footprint disclosed in the embodiment, a carbon footprint master agent, at least one level of carbon footprint object agent, and at least one carbon emission unit are constructed. As a smallest carbon footprint management object, the carbon emission unit sends its carbon footprint data to a corresponding carbon footprint object agent. The carbon footprint object agent cascades the carbon footprint data based on the hierarchical relationship between the carbon footprint object agents, and finally to the carbon footprint master agent. The carbon footprint master agent manages the carbon emission units and subordinate carbon footprint object agents according to groups and levels, to timely and accurately share the carbon footprint data among all levels of carbon footprint agents. The carbon footprint master agent may also analyze the received carbon footprint data comprehensively.

Furthermore, the hierarchical relationship between the carbon footprint object agents and the carbon emission unit are defined based on a lifecycle of the carbon footprint, and the production process and operation of a product. If there are changes in the production process, the operation, the carbon reduction measure, the double carbon target, etc. during the operation, mutual transformation and aggregation may occur between the carbon footprint object agents, and between the carbon footprint object agent and the carbon emission unit. For example, a carbon footprint object agent (first level) may serve as subordinate agent of another carbon footprint object agent (first level), and the carbon emission unit may be transformed into the carbon footprint object agent. Due to the mutual transformation and aggregation between the carbon footprint object agents and between the carbon footprint object agent and the carbon emission unit, the system has high expansion efficiency, strong adaptability, and low cost.

There are multiple implementations of S102 in the above embodiment. An optional method for implementation S102 includes the following steps. The carbon footprint object agent collects the carbon emission data for stages of the lifecycle of the carbon footprint when receiving the carbon footprint data sent by the corresponding carbon footprint unit or the carbon footprint data sent by the subordinate carbon footprint object agent, and cascades the collected data to the superior carbon footprint object agent or the carbon footprint master agent based on the hierarchical relationship between the carbon footprint object agents.

Another optional implementation of S102 includes the following steps.

The carbon footprint object agent determines whether the corresponding carbon emission unit or the subordinate carbon footprint object agent is operating properly based on an operation status in the carbon footprint data, when receiving the carbon footprint data sent by the corresponding carbon emission unit or the carbon footprint data sent by the subordinate carbon footprint object agent.

If the corresponding carbon emission unit or the subordinate carbon footprint object agent is operating improperly, the corresponding carbon emission unit or the subordinate carbon footprint object agent being operating improperly is recorded and cascaded to the superior carbon footprint object agent, and thence to the carbon footprint master agent.

If the corresponding carbon emission unit or the subordinate carbon footprint object agent is operating properly, it is determined whether the received carbon footprint data is sent by all of the carbon emission unit or the subordinate carbon footprint object agent.

If the received carbon footprint data is not sent by all of the carbon emission unit or the subordinate carbon footprint object agent, the received data is stored until the carbon footprint data is sent by all of the carbon emission unit or the subordinate carbon footprint object agent are received.

If the received carbon footprint data is already sent by all of the carbon emission unit or the subordinate carbon footprint object agent, the carbon emission data is collected for stages in the lifecycle of the carbon footprint.

The collected data is cascaded to the superior carbon footprint object agent or the carbon footprint master agent based on the hierarchical relationship between carbon footprint object agents.

In the above two implementations of the S 102, because the subordinate carbon footprint object agent may fail to obtain carbon emission data for all the stages in the lifecycle of the carbon footprint, only the carbon footprint data for this stage in the lifecycle is sent to the superior carbon footprint object.

There are multiple implementations of S103 in the above embodiment. The carbon footprint master agent analyzes the received carbon footprint data, specifically perform at least one of contribution analysis, sensitivity analysis, and carbon reduction cost analysis based on the contribution analysis and the sensitivity analysis, and optimizes a carbon reduction solution to not only achieve a carbon reduction indicator (a total amount and intensity) but also optimize economic effectiveness, thereby achieving optimization of collaborative carbon reduction throughout the lifecycle of the supply chain.

Referring to Figure 2, the carbon footprint master agent performs the contribution analysis on the received carbon footprint data by the following steps S201 and S202.

In S201, for each carbon footprint object agent, the carbon footprint master agent determines a carbon footprint contribution factor based on the received carbon footprint data. The carbon footprint contribution factor includes at least one of a total amount of carbon footprint, the number of stages in the lifecycle of the carbon footprint involved, the carbon footprint at each of the stages in the lifecycle of the carbon footprint, a product component involved, and a carbon footprint in the product component
In S202, the carbon footprint master agent calculates a proportion of the carbon footprint contribution factor based on the carbon footprint contribution factor, and performs the contribution analysis on the carbon footprint object agent.

For example, a total amount of carbon footprint of a product is T. A total number of stages in the lifecycle of carbon footprint is N. A total amount of carbon footprint for an i^{th} stage in the lifecycle of the carbon footprint is Pi, where i is an element of [1, N]. The product includes M product components. A total amount of carbon footprint of a j^{th} product component is Qⱼ, where j is an element of [1, M]. In this case, a proportion of the total amount of carbon footprint of a carbon footprint object agent a to a total amount of carbon footprint T of the product, a proportion of the number of stages of the lifecycle of carbon footprint of the carbon footprint object agent a to the total number of stages N of the lifecycle of carbon footprint, and a proportion of the carbon footprint of the carbon footprint object agent a for the i^{th} stage of the lifecycle of carbon footprint to the Pi, and a proportion of the carbon footprint of the j^{th} product component of the carbon footprint object agent a to Qⱼ may be calculated for the carbon footprint object agent a. The carbon footprint object agent with the highest contribution to the carbon footprint may be obtained by performing the contribution analysis on the carbon footprint objects, thereby determining the carbon reduction target.

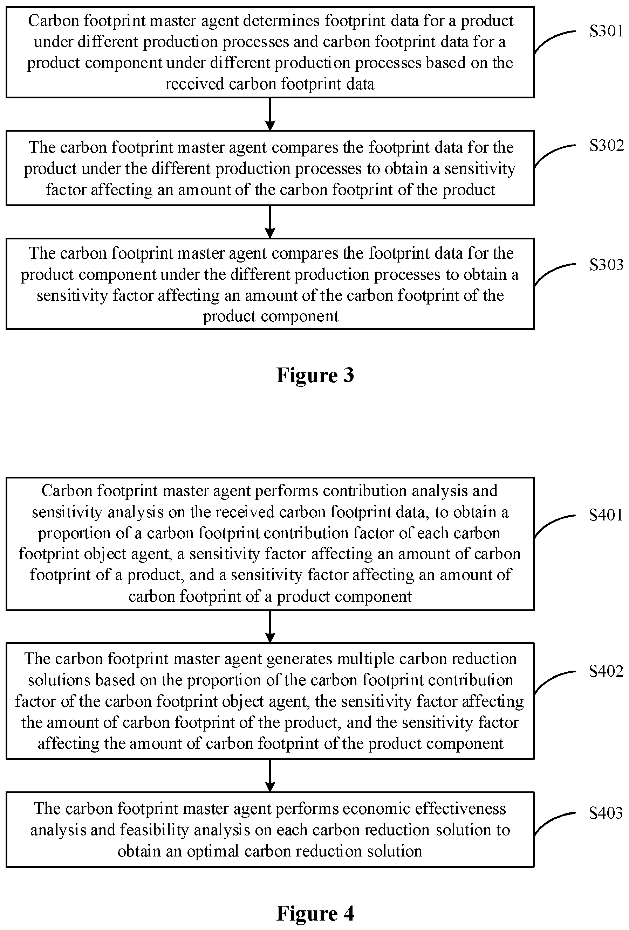

Referring to Figure 3, the carbon footprint master agent performs the sensitivity analysis on the received carbon footprint data by the following steps S301 to S303.

In S301, the carbon footprint master agent determines footprint data for a product under different production processes and carbon footprint data for a product component under different production processes based on the received carbon footprint data.

In S302, the carbon footprint master agent compares the footprint data for the product under the different production processes to obtain a sensitivity factor affecting an amount of the carbon footprint of the product.

In S303, the carbon footprint master agent compares the footprint data for the product component under the different production processes to obtain a sensitivity factor affecting an amount of the carbon footprint of the product component.

It should be noted that the above carbon footprint data used for the sensitivity analysis may be the carbon footprint data received by the carbon footprint master agent this time. For example, various carbon footprint object agents produce a same product component using different production processes. In this case, comparative analysis may be performed on the carbon footprint data corresponding to different production processes of the same product component to obtain a sensitivity factor affecting the carbon footprint of the product component, such as raw materials, temperature, humidity, and pressure.

The above carbon footprint data used for the sensitivity analysis may also include the carbon footprint data received by the carbon footprint master agent this time, and the carbon footprint data received previously by the carbon footprint master agent. For example, the product is rice. The carbon footprint data of the rice received previously is different from the carbon footprint data of the rice received this time in the production process. For example, the carbon footprint data received previously is different from the carbon footprint data received this time in a fertilization time of the rice. As a result, a total amount of carbon footprint of the rice varies. Thus, the sensitivity factor is fertilization time. For another example, the carbon footprint data received previously shows that the rice is raised with crayfishes added therein, and the carbon footprint data received this time shows that rice is raised alone. As a result, a total amount of carbon footprint of the rice varies. Thus, the sensitivity factor is whether to add the crayfishes to raise together with the rice.

The carbon footprint mater agent performs the sensitivity analysis on the received carbon footprint data, to obtain a sensitivity factor affecting an amount of carbon footprint of a product or product component, which helps to analyze a carbon reduction solution.

Referring to Figure 4, another optional implementation of S103 includes the following steps S401 to S403.

In S401, the carbon footprint master agent performs contribution analysis and sensitivity analysis on the received carbon footprint data, to obtain a proportion of a carbon footprint contribution factor of each carbon footprint object agent, a sensitivity factor affecting an amount of carbon footprint of a product, and a sensitivity factor affecting an amount of carbon footprint of a product component.

For the contribution analysis and sensitivity analysis here, reference is made to the embodiments corresponding to Figures 2 and 3 above, which will not be further repeated here.

In S402, multiple carbon reduction solutions are generated based on the proportion of the carbon footprint contribution factor of the carbon footprint object agent, the sensitivity factor affecting the amount of carbon footprint of the product, and the sensitivity factor affecting the amount of carbon footprint of the product component.

Specifically, at least one carbon footprint agent with a relatively high proportion of the carbon footprint contribution factor is determined as a carbon reduction target based on the proportions. A carbon reduction approach corresponding to the sensitivity factor is determined based on the sensitivity factor affecting the amount of carbon footprint of the product, and the sensitivity factor affecting the amount of carbon footprint of the product component. The carbon reduction target is matched with the carbon reduction approach to obtain at least one carbon reduction solution, for example, changing a production process (raw materials, temperature, humidity, and pressure) of the product component.

In S403, economic effectiveness analysis and feasibility analysis are performed on each carbon reduction solution to obtain an optimal carbon reduction solution.

For each carbon reduction solution, an investment return rate is obtained by calculating a ratio of benefits of implementing the carbon reduction solution to carbon reduction costs, to analyze economic effectiveness of the carbon reduction solution. Taking a change in raw materials for the product component as an example, a sum of the carbon reduction benefits of after the raw materials are changed and product benefits is the total benefits. A ratio of the total benefits to the costs after the raw materials are changed is the investment return rate. It can be understood that the higher the investment return rate is, the higher the economic effectiveness of the carbon reduction solution is.

For each of the carbon reduction solutions, it is also analyzed whether the carbon reduction solution is feasible. For example, arranging a solar panel on a roof can reduce carbon and has a high investment return rate. However, it is not suitable to arrange the solar panel on the roof in some scenarios. That is, this carbon reduction solution is not feasible. Therefore, it is necessary to remove the carbon reduction solution.

In summary, the carbon reduction solution with highest economic effectiveness is determined as the optimal carbon reduction solution among multiple feasible carbon reduction solutions.

Based on the method for sharing the carbon footprint disclosed in the above embodiments, a system for sharing the carbon footprint is disclosed correspondingly in the embodiments. The system includes a carbon footprint master agent, at least one level of carbon footprint object agent, and at least one carbon emission unit.

The carbon emission unit is configured to send carbon footprint data to a corresponding carbon footprint object agent.

The carbon footprint object agent is configured to cascade the carbon footprint data sent by the corresponding carbon emission unit or the carbon footprint data sent by a subordinate carbon footprint object agent to a superior carbon footprint object agent or the carbon footprint master agent based on a hierarchical relationship between the carbon footprint object agents.

The carbon footprint master agent is configured to analyze the received carbon footprint data.

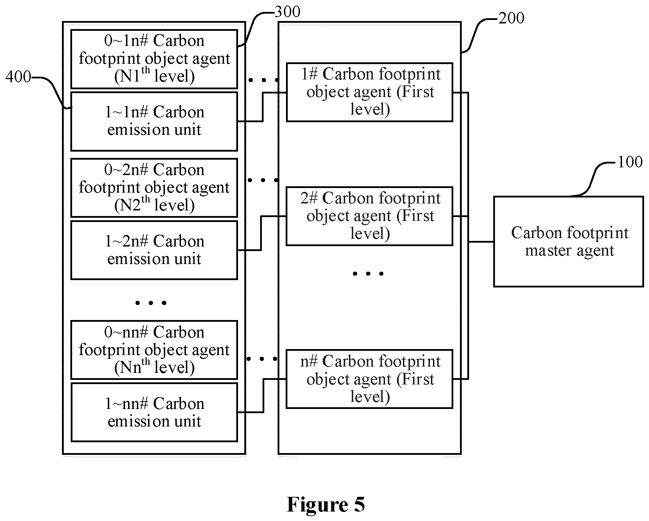

Referring to Figure 5, the system for sharing the carbon footprint includes a carbon footprint master agent 100, at least one carbon footprint object agent (first level) 200, namely 1# carbon footprint object agent (first level) to n# carbon footprint object agent (first level), and subordinate carbon footprint object agents 300 corresponding to the carbon footprint object agent (first level) 200, namely 0~1n# carbon footprint object agent (N1^{th} level) to 0-nn# carbon footprint object agent (Nn^{th} level), and at least one carbon emission unit 400.

The carbon footprint master agent includes a data interaction module, a master agent calculation module, and a data management module. The data interaction module is configured to perform data interaction with the carbon footprint object agent. The master agent calculation module is configured to analyze and calculate the carbon footprint data. The data management module is configured to manage the carbon footprint object agent and store the received carbon footprint data.

The carbon footprint object agent includes a data interaction module, a carbon footprint object agent calculation module, and a data management module. The data interaction module is configured to perform data interaction with the carbon footprint master agent, and a superior or subordinate carbon footprint object agent, or a carbon emission unit. The carbon footprint object agent calculation module is configured to statistically calculate the received carbon footprint data. The data management module is configured to manage the superior or subordinate carbon footprint object agent or the carbon emission unit, and store the received carbon footprint data.

The carbon emission unit refers to an entity or a group that generates carbon emissions, including a data interface and/or an instruction control interface. The data interface may be a communication module, an application programming interface (API), or a manual input. A physical type of the carbon emission unit may be a lamp, an air conditioner, a robot, a car, a boiler, a bottle of water, etc. A group type of the carbon emission unit may be a fleet, a workshop, a production line, a carbon emission range 1, a carbon emission range 2, and a carbon emission range 3, etc.

In some embodiments, the carbon footprint object agent is configured to collect carbon emission data for stages in a lifecycle of the carbon footprint and cascade the collected data to the superior carbon footprint object agent or the carbon footprint master agent based on the hierarchical relationship between the carbon footprint object agents, when receiving the carbon footprint data sent by the carbon emission unit or the carbon footprint data sent by the subordinate carbon footprint object agent.

In some embodiments, the carbon footprint object agent is configured to: determine whether the carbon emission unit or the subordinate carbon footprint object agent is operating properly based on an operation status in the carbon footprint data, by the carbon footprint object agent when receiving the carbon footprint data sent by the carbon emission unit or the carbon footprint data sent by the subordinate carbon footprint object agent; determine whether the received carbon footprint data is sent by all the carbon emission unit or all the subordinate carbon footprint object agent, if it is determined that the carbon emission unit or the subordinate carbon footprint object agent is operating properly; collect carbon emission data for stages in the lifecycle of the carbon footprint if it is determined that the received carbon footprint data is by all the carbon emission unit or all the subordinate carbon footprint object agent; and cascade the collected data to the superior carbon footprint object agent or the carbon footprint master agent based on the hierarchical relationship between the carbon footprint object agents.

In some embodiments, the carbon footprint master agent is configured to: determine a carbon footprint contribution factor based on the received carbon footprint data, where the carbon footprint contribution factor comprises at least one of a total amount of carbon footprint, the number of stages in the lifecycle of the carbon footprint involved, the carbon footprint at each of the stages in the lifecycle of the carbon footprint, a product component involved, and a carbon footprint in the product component; and calculate a proportion of the carbon footprint contribution factor based on the carbon footprint contribution factor, and perform contribution analysis on the carbon footprint object agent.

In some embodiments, the carbon footprint master agent is configured to: determine footprint data for a product under different production processes and carbon footprint data for a product component under different production processes based on the received carbon footprint data; compare the footprint data for the product under the different production processes to obtain a sensitivity factor affecting an amount of the carbon footprint of the product; and compare the footprint data for the product component under the different production processes to obtain a sensitivity factor affecting an amount of the carbon footprint of the product component.

In some embodiments, the carbon footprint master agent is configured to: perform contribution analysis and sensitivity analysis on the received carbon footprint data, to obtain a proportion of a carbon footprint contribution factor for each carbon footprint object agent, a sensitivity factor affecting an amount of a carbon footprint of a product, and a sensitivity factor affecting an amount of a carbon footprint of a product component; generate carbon reduction solutions based on the proportions of the carbon footprint contribution factors, the sensitivity factor, and the sensitivity factor; and perform economic analysis and feasibility analysis on the carbon reduction solutions to obtain an optimal carbon reduction solution.

According to the system for sharing carbon the footprint disclosed in the embodiments, the carbon footprint master agent, at least one level of carbon footprint object agent, and at least one carbon emission unit are constructed. As the smallest carbon footprint management object, the carbon emission unit sends its carbon footprint data to a corresponding carbon footprint object agent. The carbon footprint object agent cascades the carbon footprint data based on the hierarchical relationship between the carbon footprint object agents, and finally to the carbon footprint master agent, thereby timely and accurate sharing the carbon footprint data among all levels of carbon footprint agents. The carbon footprint master agent may also analyze the received carbon footprint data.

In addition, the carbon footprint master agent analyzes the received carbon footprint data, including at least one of contribution analysis, sensitivity analysis, and carbon reduction cost analysis based on the contribution analysis and the sensitivity analysis, and optimizes a carbon reduction solution to not only achieve a carbon reduction indicator (in a total amount and intensity) but also optimize economic effectiveness, thereby achieving optimization of collaborative carbon reduction throughout the entire lifecycle of the supply chain.

The above embodiments are described in a progressive manner herein. Each of the embodiments is mainly focused on describing its differences from other embodiments, and references may be made among these embodiments with respect to the same or similar parts. Since the device disclosed in the embodiment corresponds to the method disclosed in the embodiment, the description for the device is simple, and reference may be made to the method in the embodiment for the relevant parts.

It should be further noted that in this specification, the relational terms, such as "first" and "second", are only used to distinguish one entity or operation from another, and do not necessarily require or imply any actual relationship or order between these entities or operations. Moreover, terms "comprising", "including", or any other variant thereof are intended to be non-exclusive inclusion such that a process, method, article, or device that includes a series of elements includes not only those elements but also those that are not explicitly listed or other elements that are inherent in such process, method, article, or device. Unless expressively limited otherwise, an element limited by "comprising/including a(n)..." does not exclude existence of another identical element in the process, method, article or device including the element.

The steps of the method or algorithm described in conjunction with the embodiments of the present disclosure may be implemented by hardware, software modules executed by a processor, or a combination thereof. The software module may be stored in a random-access memory (RAM), an internal memory, a read only memory (ROM), an electrically programmable ROM, an electrically-erasable programmable ROM, a register, a hard disk, a removable disk drive, a CD-ROM, or any other storage medium known in the art.

The above embodiments may be combined with each other. For the above description of the disclosed embodiments, features described in the embodiments in this specification may be replaced or combined with each other, so that those skilled in the art can implement or use the present application.

According to the above description of the disclosed embodiments, those skilled in the art can implement or use the present application. Various modifications to the embodiments are apparent to the person skilled in the art, and the general principle herein can be implemented in other embodiments without departing from the spirit or scope of the present application. Hence, the present application is not limited to the embodiments disclosed herein, but is to conform to the widest scope in accordance with the principles and novel features disclosed herein.

## Claims

1. A method for sharing a carbon footprint, comprising:
sending carbon footprint data by a carbon emission unit to a carbon footprint object agent;
cascading the carbon footprint data sent by the carbon emission unit or carbon footprint data sent by a subordinate carbon footprint object agent to a superior carbon footprint object agent or a carbon footprint master agent, by the carbon footprint object agent based on a hierarchical relationship between the carbon footprint object agents; and
analyzing the received carbon footprint data by the carbon footprint master agent.

2. The method according to claim 1, wherein the cascading the carbon footprint data sent by the carbon emission unit or carbon footprint data sent by the subordinate carbon footprint object agent to the superior carbon footprint object agent or the carbon footprint master agent comprises:
collecting carbon emission data for stages in a lifecycle of the carbon footprint and cascading the collected data to the superior carbon footprint object agent or the carbon footprint master agent based on the hierarchical relationship between the carbon footprint object agents, by the carbon footprint object agent when receiving the carbon footprint data sent by the carbon emission unit or the carbon footprint data sent by the subordinate carbon footprint object agent.

3. The method according to claim 1, wherein the cascading the carbon footprint data sent by the carbon emission unit or the carbon footprint data sent by the subordinate carbon footprint object agent to the superior carbon footprint object agent or the carbon footprint master agent comprises:
determining whether the carbon emission unit or the subordinate carbon footprint object agent is operating properly based on an operation status in the carbon footprint data, by the carbon footprint object agent when receiving the carbon footprint data sent by the carbon emission unit or the carbon footprint data sent by the subordinate carbon footprint object agent;
determining whether the received carbon footprint data is sent by all the carbon emission unit or all the subordinate carbon footprint object agent, if it is determined that the carbon emission unit or the subordinate carbon footprint object agent is operating properly;
collecting carbon emission data for stages in the lifecycle of the carbon footprint if it is determined that the received carbon footprint data is sent by all the carbon emission unit or all the subordinate carbon footprint object agent; and
cascading the collected data to the superior carbon footprint object agent or the carbon footprint master agent by the carbon footprint object agent based on the hierarchical relationship between the carbon footprint object agents.

4. The method according to claim 1, wherein the analyzing the received carbon footprint data by the carbon footprint master agent comprises: for each of the carbon footprint object agents,
determining a carbon footprint contribution factor by the carbon footprint master agent based on the received carbon footprint data, wherein the carbon footprint contribution factor comprises at least one of a total amount of carbon footprint, the number of stages in the lifecycle of the carbon footprint involved, the carbon footprint at each of the stages in the lifecycle of the carbon footprint, a product component involved, and a carbon footprint in the product component; and
calculating a proportion of the carbon footprint contribution factor based on the carbon footprint contribution factor, and performing contribution analysis on the carbon footprint object agent.

5. The method according to claim 1, wherein the analyzing the received carbon footprint data by the carbon footprint master agent comprises:
determining carbon footprint data for a product under different production processes and carbon footprint data for a product component under different production processes based on the received carbon footprint data;
comparing the footprint data for the product under the different production processes to obtain a sensitivity factor affecting an amount of the carbon footprint of the product; and
comparing the footprint data for the product component under the different production processes to obtain a sensitivity factor affecting an amount of the carbon footprint of the product component.

6. The method according to claim 4 or 5, wherein the analyzing the received carbon footprint data by the carbon footprint master agent comprises:
performing contribution analysis and sensitivity analysis on the received carbon footprint data, to obtain a proportion of a carbon footprint contribution factor for each carbon footprint object agent, a sensitivity factor affecting an amount of a carbon footprint of a product, and a sensitivity factor affecting an amount of a carbon footprint of a product component;
generating carbon reduction solutions based on the proportions of the carbon footprint contribution factors, the sensitivity factor affecting the amount of carbon footprint of the product, and the sensitivity factor affecting the amount of carbon footprint of the product component; and
performing economic analysis and feasibility analysis on the carbon reduction solutions to obtain an optimal carbon reduction solution.

7. A system for sharing carbon footprint, comprising: a carbon footprint master agent, at least one level of carbon footprint object agent, and at least one carbon emission unit, wherein
the carbon emission unit is configured to send carbon footprint data to the corresponding carbon footprint object agent;
the carbon footprint object agent is configured to cascade the carbon footprint data sent by the carbon emission unit or carbon footprint data sent by a subordinate carbon footprint object agent to a superior carbon footprint object agent or the carbon footprint master agent based on a hierarchical relationship between the carbon footprint object agents; and
the carbon footprint master agent is configured to analyze the received carbon footprint data.

8. The system according to claim 7, wherein the carbon footprint object agent is configured to:
collect carbon emission data for stages in a lifecycle of the carbon footprint and cascade the collected data to the superior carbon footprint object agent or the carbon footprint master agent based on the hierarchical relationship between the carbon footprint object agents, when receiving the carbon footprint data sent by the carbon emission unit or the carbon footprint data sent by the subordinate carbon footprint object agent.

9. The system according to claim 7, wherein the carbon footprint object agent is configured to:
determine whether the carbon emission unit or the subordinate carbon footprint object agent is operating properly based on an operation status in the carbon footprint data, by the carbon footprint object agent when receiving the carbon footprint data sent by the carbon emission unit or the carbon footprint data sent by the subordinate carbon footprint object agent;
determine whether the received carbon footprint data is sent by all the carbon emission unit or all the subordinate carbon footprint object agent, if it is determined that the carbon emission unit or the subordinate carbon footprint object agent is operating properly;
collect carbon emission data for stages in the lifecycle of the carbon footprint if it is determined that the received carbon footprint data is by all the carbon emission unit or all the subordinate carbon footprint object agent; and
cascade the collected data to the superior carbon footprint object agent or the carbon footprint master agent based on the hierarchical relationship between the carbon footprint object agents.

10. The system according to claim 7, wherein the carbon footprint master agent is configured to: for each of the carbon footprint object agents,
determine a carbon footprint contribution factor based on the received carbon footprint data, wherein the carbon footprint contribution factor comprises at least one of a total amount of carbon footprint, the number of stages in the lifecycle of the carbon footprint involved, the carbon footprint at each of the stages in the lifecycle of the carbon footprint, a product component involved, and a carbon footprint in the product component; and
calculate a proportion of the carbon footprint contribution factor based on the carbon footprint contribution factor, and perform contribution analysis on the carbon footprint object agent.

11. The system according to claim 7, wherein the carbon footprint master agent is configured to:
determine carbon footprint data for a product under different production processes and carbon footprint data for a product component under different production processes based on the received carbon footprint data;
compare the footprint data for the product under the different production processes to obtain a sensitivity factor affecting an amount of the carbon footprint of the product; and
compare the footprint data for the product component under the different production processes to obtain a sensitivity factor affecting an amount of the carbon footprint of the product component.

12. The system according to claim 10 or 11, wherein the carbon footprint master agent is configured to:
perform contribution analysis and sensitivity analysis on the received carbon footprint data, to obtain a proportion of a carbon footprint contribution factor for each carbon footprint object agent, a sensitivity factor affecting an amount of a carbon footprint of a product, and a sensitivity factor affecting an amount of a carbon footprint of a product component;
generate carbon reduction solutions based on the proportions of the carbon footprint contribution factors, the sensitivity factor, and the sensitivity factor; and
perform economic analysis and feasibility analysis on the carbon reduction solutions to obtain an optimal carbon reduction solution.
